# FASCICULE DE BREVET EUROPEEN

(11) **EP 0 636 588 B1**
(45) Date de publication et mention de la délivrance du brevet: **13.06.2001**
(21) Numéro de dépôt: 94401650.0
(22) Date de dépôt: 19.07.1994
(51) Int. Cl.: C03C 17/04, C03C 8/14

(54) **Substrats emailles en verre**
Emaillierte Glassubstrate
Enamelled glass substrates

(30) Priorité: 23.07.1993 FR 9309126
(43) Date de publication de la demande: 01.02.1995
(73) Titulaire: SAINT-GOBAIN GLASS FRANCE, 92400 Courbevoie (FR)
(72) Inventeur: Wyart, Jean-Pierre, F-59215 Abscon (FR)
(74) Mandataire: Muller, René

(56) Documents cités:
- EP-A- 0 074 314
- EP-A- 0 174 893
- EP-A- 0 270 961
- EP-A- 0 490 491
- EP-A- 0 496 670
- DE-A- 3 306 107
- DE-A- 4 134 600
- GB-A- 2 245 221
- US-A- 3 956 558
- US-A- 4 975 301

## Description

La présente invention concerne des substrats émaillés en verre, lesdits substrats étant destinés, notamment, à la réalisation de revêtements de bâtiments.

Il est déjà connu d'utiliser comme revêtement de bâtiment, notamment de façades de bâtiment, des vitrages trempés revêtus, sur l'une de leur face, d'une couche d'émail de couleur appropriée. Ces vitrages, pour être utilisés dans le bâtiment, doivent satisfaire à certains règlements ou être conformes à certaines normes et doivent, notamment, présenter une bonne résistance aux chocs, à l'abrasion et au vieillissement. L'industrie s'attache ainsi à trouver des revêtements toujours plus performants en conservant un aspect agréable à ces produits et en élargissant la gamme des coloris disponibles.

L'objet de la présente invention est de fournir des substrats en verre revêtus d'émail sur au moins une partie de l'une de leurs faces et destinés, notamment, au revêtement des façades, ces substrats présentant à la fois des caractéristiques de résistance, notamment mécanique, améliorées et un aspect esthétique plaisant, si ce n'est original.

Ce but est atteint grâce à un substrat en verre revêtu sur au moins une partie de l'une de ses faces d'au moins deux couches d'émail superposées, la couche d'émail au contact du substrat en verre comprenant une matrice vitreuse et des particules réfléchissantes dont l'indice de réfraction est différent de celui de la matrice vitreuse, ces particules réfléchissantes présentant en outre une température de fusion supérieure à celle de la matrice vitreuse, et la seconde couche d'émail ne comprenant pas de particules réfléchissantes ou comprenant des particules réfléchissantes dans une proportion inférieure ou égale à celle des particules réfléchissantes au sein de la première couche d'émail.

Les substrats selon l'invention consistent, notamment, en une ou plusieurs feuilles de verre, ou vitrages, préférentiellement plats, destinés à servir d'allèges, de parements d'éléments de remplissage, de bandeaux de magasins... Ils peuvent également consister en des éléments de verre non plats (tels que des bouteilles) ou tout élément de verre servant à la décoration ou à la réalisation de revêtements.

Les substrats selon l'invention destinés au revêtement de façades sont, avantageusement, des feuilles de verre trempées lors de l'opération de cuisson des émaux et présentant de ce fait une résistance accrue aux chocs de corps étrangers et aux chocs thermiques, ainsi qu'une bonne résistance à la flexion.

Les compositions d'émail utilisées selon l'invention se présentent avant cuisson sous forme, notamment, d'une fritte de verre et d'un médium, ledit médium comprenant un liant permettant avant cuisson la liaison avec le verre et/ou un diluant ou solvant pour la mise à viscosité désirée. Ces compositions d'émail peuvent également comprendre des pigments à base d'oxydes métalliques employés généralement en tant que colorants. Différents exemples de composants rentrant dans les compositions d'émail pouvant être utilisées dans le cadre de cette invention sont donnés, notamment, dans des brevets tels que le brevet EP 0 174 893, EP 0 074 314 ou encore la demande de brevet FR 2 672 044.

Notons que le ou les médiums utilisés dans les compositions d'émail selon l'invention sont éliminés par évaporation et/ou carbonisation lors des opérations de séchage et/ou de cuisson des émaux, les frittes de verre et les pigments éventuels donnant après cuisson et refroidissement des émaux des matrices vitreuses transparentes ou non, colorées ou non, ces caractéristiques des matrices obtenues dépendant de l'émail utilisé et de la position de la couche d'émail par rapport au substrat en verre dans le substrat émaillé selon l'invention, comme explicité ultérieurement.

En plus des composants précédemment cités, la couche d'émail au contact du substrat en verre contient, comme indiqué dans la définition de l'invention, des particules réfléchissantes. Ces particules possèdent un indice de réfraction différent de celui de la matrice vitreuse de l'émail au contact du substrat et présentent une température de fusion supérieure à celle de ladite matrice vitreuse, notamment une température de fusion supérieure à la température utilisée pour cuire l'émail et vitrifier les frittes de verre avec les pigments éventuels.

De préférence, les particules réfléchissantes selon l'invention consistent en des particules formées ou recouvertes d'au moins un métal tel que l'aluminium, le chrome, le nickel, le zirconium, le palladium, le cadmium, le cuivre... et/ou formées ou recouvertes d'au moins un oxyde métallique tel que le dioxyde de titane.

De façon particulièrement préférée, les particules réfléchissantes utilisées consistent en des particules de mica recouvertes d'au moins un métal et/ou un oxyde métallique tels que ceux précédemment cités.

Généralement pour obtenir un aspect brillant et/ou métallisé convenable, la couche d'émail au contact du substrat en verre comprend plus de 3 % en volume de particules réfléchissantes et, de façon préférée, plus de 10 % en volume desdites particules, les particules en question présentant de préférence une granulométrie comprise entre 10 et 200 *µ*m, et la matrice vitreuse de la couche d'émail au contact du substrat est préférentiellement transparente ou translucide. Le fait d'avoir une matrice vitreuse transparente ou translucide pour la couche d'émail au contact du substrat en verre permet de renforcer l'effet lumineux de réflexion produit par les particules réfléchissantes tout en conservant un taux de particules réfléchissantes limité. Il convient en effet de remarquer que l'adhésion de l'émail contenant les particules réfléchissantes au substrat en verre au contact duquel il se trouve se fait par l'intermédiaire de la matrice vitreuse dudit émail et que la présence des particules réfléchissantes au sein de ladite matrice empêche d'autant plus l'adhésion de l'émail au substrat que le taux desdites particules au sein de l'émail est important. Afin de renforcer l'effet lumineux produit par les particules réfléchissantes sans utiliser un taux trop élevé desdites particules pouvant nuire à la bonne adhésion de l'émail, les composants autres que les particules métalliques de l'émail au contact du substrat sont donc préférentiellement choisis de façon à donner par vitrification une matrice transparente ou translucide faisant ressortir plus facilement les particules réfléchissantes, même à faible taux.

De préférence, le facteur de transmission lumineuse de la matrice vitreuse de l'émail au contact du substrat en verre dans le substrat émaillé selon l'invention est d'au moins 50 % et le taux de particules réfléchissantes au sein dudit émail n'excède pas 80 % en volume et, de préférence, 70 % en volume.

Contrairement à la première couche d'émail au contact du substrat et, de façon préférée, la seconde couche d'émail déposée sur le substrat ne comprend pas de particules réfléchissantes. Les composants de cette couche ne sont en outre pas nécessairement identiques à ceux de la couche d'émail au contact du substrat, particules réfléchissantes mises à part. La seconde couche d'émail permet en premier lieu d'améliorer les caractéristiques de résistance à l'abrasion du substrat revêtu de la première couche d'émail. En effet, comme indiqué précédemment, du fait de la présence dans cette première couche des particules réfléchissantes, l'adhésion de ladite couche sur le substrat peut se révéler insuffisante et le substrat revêtu de cette seule couche peut présenter une résistance à l'abrasion insatisfaisante. Le dépôt d'une seconde couche permet alors d'améliorer la résistance à l'abrasion du substrat émaillé.

Notons à ce sujet que la présence de particules réfléchissantes au sein de la seconde couche d'émail n'est cependant pas exclue. Dans ce cas, pour conserver certaines caractéristiques de résistance à l'abrasion au substrat émaillé, la proportion de ces particules au sein de ladite seconde couche est préférentiellement inférieure à celle des particules réfléchissantes au sein de la couche d'émail au contact du substrat.

La seconde couche d'émail permet également de conférer au substrat revêtu de la première couche d'émail l'opacité requise dans certaines applications et, dans le cas où la matrice vitreuse de la première couche précitée est incolore et transparente ou translucide, permet de conférer sa coloration au substrat émaillé selon l'invention. Le fait d'utiliser un émail présentant après cuisson une matrice vitreuse de coloration neutre et transparente ou translucide pour la couche d'émail au contact du substrat présente à ce propos l'avantage de permettre plus facilement l'association de cette première couche à une seconde couche indépendamment notamment de la coloration de cette dernière.

Dans le cas où le substrat selon l'invention consiste en une ou plusieurs feuilles de verre, la seconde couche d'émail est préférentiellement opaque et, dans le cas où le substrat selon l'invention consiste en un élément de verre creux tel qu'une bouteille, la seconde couche d'émail est de préférence transparente.

Quel que soit le mode de réalisation de la présente invention, il convient de signaler que la combinaison du substrat en verre et des deux couches d'émail selon l'invention permet d'obtenir un produit présentant des propriétés mécaniques améliorées par rapport à un substrat en verre revêtu d'un émail traditionnel, ce produit présentant de plus un aspect brillant et/ou métallisé original. Cet aspect peut se caractériser par le taux de réflexion diffuse mesuré sur les produits obtenus. Ce taux de réflexion diffuse est déterminé par un spectrophotomètre Minolta CM 2002 avec un illuminant D 65, selon la notice d'utilisation de cet appareil. Dans le cas des produits selon l'invention, le taux de réflexion diffuse dépasse généralement d'au moins 50 % le taux de réflexion diffuse mesuré sur les substrats en verre revêtus d'un émail traditionnel pour une même longueur d'onde dans le visible.

De préférence, l'épaisseur de la couche d'émail à particules réfléchissantes déposée sur le verre est comprise entre 30 *µ*m et 100 *µ*m, l'épaisseur de la deuxième couche étant comprise entre 30 *µ*m et 200 *µ*m. Il convient de remarquer que, plus l'épaisseur de la couche d'émail au contact du substrat en verre est faible, plus la concentration des particules réfléchissantes au sein de ladite couche est avantageusement faible pour permettre une adhésion suffisante de ladite couche au substrat et une résistance suffisante à l'abrasion du substrat émaillé, et plus il est intéressant d'utiliser pour ladite couche une composition d'émail donnant après vitrification des frittes et éventuellement pigments qu'elle contient une matrice vitreuse transparente ou translucide faisant plus facilement ressortir les particules réfléchissantes de ladite couche pour des faibles concentrations de particules réfléchissantes.

Pour fabriquer le produit émaillé selon l'invention, on peut utiliser le procédé suivant : on dépose la première couche d'émail, à savoir celle contenant les particules réfléchissantes, sur le substrat en verre par sérigraphie, pulvérisation ou par rideau. Cette couche est ensuite séchée, soit par infrarouge pour éliminer les solvants ou diluants des médiums présents dans les compositions d'émail, soit par rayonnement U.V. pour provoquer le durcissement par polymérisation de ladite couche, soit par micro-ondes et/ou soufflage d'air chaud. Puis l'on dépose la seconde couche d'émail sur la première, de préférence par sérigraphie ou par rideau, on la sèche et on traite thermiquement les deux couches à haute température afin de vitrifier les émaux et obtenir le revêtement définitif.

Selon une variante avantageuse, les deux couches sont déposées en mouillé/mouillé sur le substrat en verre, c'est-à-dire selon la méthode suivante : la première couche est déposée sur le substrat par sérigraphie, pulvérisation ou rideau et revêtue de la seconde couche d'émail, par sérigraphie ou rideau, alors qu'elle se trouve encore à l'état humide. Les deux couches sont ensuite séchées, puis soumises à un traitement thermique à haute température pour vitrifier les émaux et obtenir le revêtement définitif. Cette méthode présente notamment l'avantage de supprimer ou de réduire l'étape intermédiaire de séchage de la première couche, coûteuse en énergie et limitant la productivité.

Signalons que le traitement thermique à haute température du substrat revêtu des deux couches d'émail est avantageusement celui de l'opération de trempe thermique du verre lorsque l'on désire obtenir un verre trempé.

Les exemples suivants illustrent la présente invention sans toutefois en limiter la portée, en donnant notamment des exemples de substrats émaillés selon la présente invention et en comparant les caractéristiques de résistance mécanique en flexion et de réflexion diffuse des produits selon la présente invention avec celles des substrats en verre revêtus d'un émail traditionnel.

### EXEMPLE 1

Dans cet exemple, une feuille de verre est revêtue d'une couche d'émail A à environ 15 % en volume de particules réfléchissantes comprenant une matrice vitreuse à base d'oxydes métalliques, essentiellement d'oxyde de plomb et, en tant que particules réfléchissantes, des particules de mica recouvertes d'une ou plusieurs couches d'oxydes métalliques (particules commercialisées par la société Merck sous la référence pigments Iriodine) et de granulométrie comprise entre 40 et 200 *µ*m, puis revêtue d'une couche d'un émail traditionnel B comprenant une matrice vitreuse à base d'oxydes métalliques, essentiellement d'oxyde de plomb et des oxydes métalliques ou pigments conférant une coloration grise à ladite couche.

La composition d'émail devant former la première couche d'émail A et comprenant un médium aqueux est appliquée par pulvérisation sur la feuille de verre à température ambiante de 20°C environ afin de former une bande émaillée de masse surfacique 150 g/m². La composition d'émail devant former la seconde couche d'émail B et comprenant un médium aqueux est consécutivement appliquée par rideau sur la première avec une masse surfacique de 230 g/m². Les deux couches sont ensuite séchées puis soumises à un traitement thermique pour obtenir le revêtement définitif. Le traitement thermique en question correspond à celui de l'opération de trempe thermique du verre de façon à obtenir un verre trempé.

Le produit émaillé obtenu présente une réflexion diffuse de 13 %, cette réflexion diffuse étant mesurée par un spectrophotomètre Minolta CM 2002 avec un illuminant D 65.

Egalement, la contrainte de rupture en flexion mesurée pour ce produit dans les conditions définies par la norme ISO R 178 est de 110 MPa.

### EXEMPLE 2

Dans cet exemple, une feuille de verre est revêtue de deux couches d'émail à particules réfléchissantes A tel que décrit dans l'exemple 1, selon le même procédé que précédemment décrit dans ledit exemple et avec des masses surfaciques respectives de 165 g/m².

Le produit émaillé obtenu présente une réflexion diffuse de 14 %.

Egalement, la contrainte de rupture en flexion mesurée pour ce produit dans les conditions définies par la norme ISO R 178 est de 107 MPa.

### EXEMPLE COMPARATIF

Dans cet exemple, une feuille de verre est revêtue de deux couches d'émail traditionnel B tel que décrit dans l'exemple 1 et pour une masse surfacique totale de 330 g/m².

Le produit émaillé obtenu présente une réflexion diffuse de 4 %.

Egalement, la contrainte de rupture en flexion mesurée pour ce produit dans les conditions définies par la norme ISO R 178 est de 89 MPa.

Ainsi la réflexion diffuse d'un verre émaillé selon l'invention comportant notamment une couche d'émail à particules réfléchissantes au contact du verre est supérieure d'au moins 50 % à celle d'un verre émaillé comportant uniquement des couches d'émail traditionnel, ceci pour une longueur d'onde dans le visible donnée. Le taux de réflexion diffuse est environ 3 fois plus important dans l'exemple 1 que dans l'exemple comparatif, les couches émaillées sur le substrat présentant dans chaque cas une coloration grise.

Les substrats émaillés selon la présente invention sont, plus particulièrement, destinés aux revêtement de façades (allèges ventilées ou éléments de remplissage, bandeaux de magasins...). Ils peuvent également être utilisés comme revêtement pour des paillasses de laboratoires ou des emballages...

## Revendications

1. Substrat émaillé en verre, caractérisé en ce qu'il comprend, sur au moins une partie de l'une de ses faces, au moins deux couches d'émail superposées, la première couche d'émail au contact du substrat en verre comprenant une matrice vitreuse et des particules réfléchissantes dont l'indice de réfraction est différent de celui de la matrice vitreuse, ces particules réfléchissantes présentant en outre une température de fusion supérieure à celle de la matrice vitreuse, et la seconde couche d'émail ne comprenant pas de particules réfléchissants ou comprenant des particules réfléchissantes dans une proportion inférieure ou égale à celle des particules réfléchissantes au sein de la première couche d'émail.

2. Substrat émaillé en verre selon la revendication 1, caractérisé en ce que le substrat en verre est un vitrage plat comprenant, au moins, une feuille de verre.

3. Substrat émaillé en verre selon la revendication 2, caractérisé en ce que le vitrage contient, au moins, une feuille de verre trempé.

4. Substrat émaillé en verre selon une des revendications 1 à 3, caractérisé en ce que les particules réfléchissantes sont des particules formées ou recouvertes d'au moins un métal tel que l'aluminium, le chrome, le nickel, le zirconium, le palladium, le cadmium, le cuivre et/ou formées ou recouvertes d'au moins un oxyde métallique tel que le dioxyde de titane.

5. Substrat émaillé en verre selon la revendication 4, caractérisé en ce que les particules réfléchissantes sont des particules de mica recouvertes d'au moins un métal et/ou d'au moins un oxyde métallique.

6. Substrat émaillé en verre selon une des revendications 1 à 5, caractérisé en ce les particules réfléchissantes ont une granulométrie comprise entre 10 et 200 µm.

7. Substrat émaillé en verre selon une des revendications 1 à 6, caractérisé en ce que le taux de particules réfléchissantes dans la couche d'émail au contact du substrat en verre est supérieur à 3% en volume et, de préférence, supérieur à 10% en volume.

8. Substrat émaillé en verre selon une des revendications 1 à 7, caractérisé en ce que le taux de particules réfléchissantes dans la couche d'émail au contact du substrat en verre est inférieur à 80% en volume et, de préférence, inférieur à 70% en volume.

9. Substrat émaillé en verre selon une des revendications 1 à 8, caractérisé en ce que la matrice vitreuse de la couche d'émail au contact du substrat en verre est transparente ou translucide et présente préférentiellement un facteur de transmission lumineuse d'au moins 50%.

10. Substrat émaillé en verre selon une des revendications 1 à 9, caractérisé en ce que le taux de réflexion diffuse dudit substrat émaillé est supérieur d'au moins 50% au taux de réflexion diffuse d'un émail traditionnel pour une longueur d'onde dans le visible donnée.

11. Substrat émaillé en verre selon une des revendications 1 à 10, caractérisé en ce que l'épaisseur de la couche d'émail au contact du substrat en verre est comprise entre 30 µm et 100 µm et celle de la couche d'émail la plus éloignée du substrat en verre est comprise entre 30 µm et 200 µm.

12. Procédé pour fabriquer le substrat émaillé selon une des revendications 1 à 11, caractérisé en ce que l'on dépose la première couche d'émail, contenant les particules réfléchissantes, sur le substrat en verre par sérigraphie, pulvérisation ou rideau, puis l'on dépose la seconde couche d'émail sur la première, avant séchage et traitement thermique à haute température pour vitrifier les émaux.

13. Procédé pour fabriquer le substrat émaillé selon une des revendications 1 à 11, caractérisé en ce que les deux couches sont déposées en mouillé/mouillé.

## Claims

1. Enamelled glass substrate, characterized in that it comprises, on at least part of one of its faces, at least two superimposed enamelled layers, the first enamel layer in contact with the glass substrate comprising a vitreous matrix and reflecting particles, whose refractive index differs from that of the vitreous matrix, said reflecting particles also having a higher melting point than that of the vitreous matrix, and the second enamel layer not comprising reflecting particles or comprising such reflecting particles in a proportion equal to or lower than that of the reflecting particles within the first enamel layer.

2. Enamelled glass substrate according to claim 1, characterized in that the glass substrate is a flat glazing comprising at least one glass sheet.

3. Enamelled glass substrate according to claim 2, characterized in that the glazing contains at least one tempered glass sheet.

4. Enamelled glass substrate according to one of the claims 1 to 3, characterized in that the reflecting particles are particles formed or covered by at least one metal such as aluminium, chromium, nickel, zirconium, palladium, cadmium, copper and/or formed or covered by at least one metal oxide such as titanium dioxide.

5. Enamelled glass substrate according to claim 4, characterized in that the reflecting particles are mica particles covered by at least one metal and/or at least one metal oxide.

6. Enamelled glass substrate according to one of the claims 1 to 5, characterized in that the reflecting particles have a grain size between 10 and 200 µm.

7. Enamelled glass substrate according to one of the claims 1 to 6, characterized in that the level of reflecting particles in the enamel layer in contact with the glass substrate exceeds 3 vol.% and preferably exceeds 10 vol.%.

8. Enamelled glass substrate according to one of the claims 1 to 7, characterized in that the level of reflecting particles in the enamel layer in contact with the glass substrate is below 80 vol.% and preferably below 70 vol.%.

9. Enamelled glass substrate according to one of the claims 1 to 8, characterized in that the vitreous matrix of the enamel layer in contact with the glass substrate is transparent or translucent and preferably has a light transmission factor of at least 50%.

10. Enamelled glass substrate according to one of the claims 1 to 9, characterized in that the diffuse reflection level of said enamelled substrate exceeds by at least 50% the diffuse reflection level of a conventional enamel for a given wavelength in the visible range.

11. Enamelled glass substrate according to one of the claims 1 to 10, characterized in that the thickness of the enamel layer in contact with the glass substrate is between 30 and 100 µm and that of the enamel layer further removed from the glass substrate is between 30 and 200 µm.

12. Process for the production of the enamelled substrate according to one of the claims 1 to 11, characterized in that the first enamel layer containing the reflecting particles is deposited on the glass substrate by screen printing, spray coating or curtain coating and then the second enamel layer is deposited on the first, before drying and high temperature heat treatment for the vitrification of the enamels.

13. Process for the production of the enamelled substrate according to one of the claims 1 to 11, characterized in that the two layers are deposited wet on wet.

## Patentansprüche

1. Emailliertes Glassubstrat, **dadurch gekennzeichnet, dass** es auf wenigstens einem Teil einer Seite mindestens zwei übereinanderliegende Emailschichten umfasst, wobei sich die erste Emailschicht mit dem Glassubstrat in Berührung befindet und eine Glasmatrix und reflektierende Teilchen, deren Brechungsindex sich von dem der Glasmatrix unterscheidet und deren Schmelztemperatur außerdem höher als diejenige der Glasmatrix ist, enthält, und die zweite Emailschicht keine reflektierenden Teilchen oder reflektierende Teilchen mit einem Anteil enthält, der kleiner oder gleich demjenigen der reflektierenden Teilchen in der ersten Emailschicht ist.

2. Emailliertes Glassubstrat nach Anspruch 1, **dadurch gekennzeichnet, dass** das Glassubstrat eine plane Verglasung ist, die mindestens eine Glasscheibe enthält.

3. Emailliertes Glassubstrat nach Anspruch 2, **dadurch gekennzeichnet, dass** die Verglasung mindestens eine vorgespannte Glasscheibe enthält.

4. Emailliertes Glassubstrat nach einem der Ansprüche 1 bis 3, **dadurch gekennzeichnet, dass** die reflektierenden Teilchen solche sind, die aus mindestens einem Metall wie Aluminium, Chrom, Nickel, Zirconium, Palladium, Cadmium und Kupfer gebildet oder damit beschichtet sind und/oder aus mindestens einem Metalloxid wie Titandioxid gebildet oder damit beschichtet sind.

5. Emailliertes Glassubstrat nach Anspruch 4, **dadurch gekennzeichnet, dass** die reflektierenden Teilchen mit mindestens einem Metall und/oder mindestens einem Metalloxid beschichtete Glimmerteilchen sind.

6. Emailliertes Glassubstrat nach einem der Ansprüche 1 bis 5, **dadurch gekennzeichnet, dass** die Korngröße der reflektierenden Teilchen 10 bis 200 µm beträgt.

7. Emailliertes Glassubstrat nach einem der Ansprüche 1 bis 6, **dadurch gekennzeichnet, dass** der Anteil der reflektierenden Teilchen an der Emailschicht, die sich mit dem Glassubstrat in Berührung befindet, mehr als 3 Vol.-% und vorzugsweise mehr als 10 Vol.-% beträgt.

8. Emailliertes Glassubstrat nach einem der Ansprüche 1 bis 7, **dadurch gekennzeichnet, dass** der Anteil der reflektierenden Teilchen an der Emailschicht, die sich mit dem Glassubstrat in Berührung befindet, weniger als 80 Vol.-% und vorzugsweise weniger als 70 Vol.-% beträgt.

9. Emailliertes Glassubstrat nach einem der Ansprüche 1 bis 8, **dadurch gekennzeichnet, dass** die Glasmatrix der Emailschicht, die sich mit dem Glassubstrat in Berührung befindet, durchsichtig oder durchscheinend ist und vorzugsweise einen Lichttransmissionsgrad von mindestens 50 % aufweist.

10. Emailliertes Glassubstrat nach einem der Ansprüche 1 bis 9, **dadurch gekennzeichnet, dass** der Remissionsgrad des emaillierten Substrats bei einer gegebenen Wellenlänge im sichtbaren Bereich um mehr als mindestens 50 % höher ist als der Remissionsgrad eines herkömmlichen Emails.

11. Emailliertes Glassubstrat nach einem der Ansprüche 1 bis 10, **dadurch gekennzeichnet, dass** die Dicke der Emailschicht, die sich mit dem Glassubstrat in Berührung befindet, 30 bis 100 µm und diejenige der vom Glassubstrat am weitesten entfernten Emailschicht 30 bis 200 µm beträgt.

12. Verfahren zur Herstellung des emaillierten Substrats nach einem der Ansprüche 1 bis 11, **dadurch gekennzeichnet, dass** auf dem Glassubstrat die die reflektierenden Teilchen enthaltende erste Emailschicht durch Siebdruck, Zerstäuben oder Schleier und anschließend auf der ersten Emailschicht die zweite vor der Trocknung und Wärmebehandlung bei hoher Temperatur, um die Emails einzubrennen, aufgebracht wird.

13. Verfahren zur Herstellung des emaillierten Substrats nach einem der Ansprüche 1 bis 11, **dadurch gekennzeichnet, dass** die zwei Schichten naß auf naß aufgebracht werden.
